# FASCICULE DE BREVET EUROPEEN

(11) **EP 2 649 779 B1**
(45) Date de publication et mention de la délivrance du brevet: **14.11.2018**
(21) Numéro de dépôt: 11794112.0
(22) Date de dépôt: 06.12.2011
(51) Int. Cl.: H04M 1/725, G07F 7/10, G06Q 20/00, G07G 1/00, G06Q 20/32, G07F 7/08, H04M 1/02, H04M 1/04

(54) **INTERFACE MODULAIRE COMPRISE DANS UN TERMINAL DE PAIEMENT ÉLECTRONIQUE, AVEC ARTICULATION D'UN COUVERCLE PAR TRANSLATION ET ROTATION.**
MODULARE SCHNITTSTELLE EINES ELEKTRONISCHEN ZAHLUNGSTERMINALS MIT BEWEGLICHKEIT EINER ABDECKUNG DURCH VERSCHIEBUNG UND DREHUNG
MODULAR INTERFACE CONTAINED IN AN ELECTRONIC PAYMENT TERMINAL, WITH ARTICULATION OF A COVER BY TRANSLATION AND ROTATION.

(30) Priorité: 07.12.2010 FR 1060209; 07.12.2010 FR 1060204
(43) Date de publication de la demande: 16.10.2013
(73) Titulaire: Ingenico Group, 75015 Paris (FR)
(72) Inventeur: YERNAUX, Olivier, F-30290 Laudun L'ardoise (FR); BARNERON, Sylvain, F-26000 Valence (FR)
(74) Mandataire: Vidon Brevets & Stratégie
(86) Numéro de dépôt international: PCT/EP2011/071856
(87) Numéro de publication internationale: WO 2012/076497

(56) Documents cités:
- EP-A1- 1 732 291
- US-A1- 2001 037 249
- US-B1- 6 598 845
- US-B1- 7 003 316

## Description

### 1. Domaine de l'invention

La présente invention se rapporte au domaine des terminaux de paiement électroniques. Plus particulièrement, la présente invention se rapporte à une interface modulaire comprise dans un nouveau type de terminal de paiement électronique qui peut être appairé.

### 2. Art antérieur

A l'heure actuelle, les terminaux de paiement sont majoritairement utilisés pour permettre le règlement des achats de biens et de services au sein des points de vente. Ces terminaux comprennent généralement un lecteur de carte à puce et un lecteur de carte magnétique. Ils comprennent également un écran, permettant notamment de visualiser les montants des transactions, et un clavier de saisie de ces mêmes montants ainsi que des codes confidentiels saisis par les clients, ou bien un écran tactile.

Les terminaux les plus récents sont connectés à des caisses enregistreuses et/ou à des ordinateurs par l'intermédiaire d'un réseau de communication. De telles connexions peuvent être filaires, par exemple de type Ethernet, ou sans fil. Ces connexions permettent par exemple de se connecter à un serveur d'authentification ou à un serveur bancaire en vue de l'obtention d'autorisation de débit.

Pour pouvoir communiquer avec l'extérieur, et notamment avec des serveurs bancaires, le terminal de paiement utilise donc des moyens de connexion. L'un de ces moyens consiste à utiliser un réseau de communication sans fil, par exemple GPRS (de l'anglais « *General Packet Radio Service* »). Le terminal de paiement est alors muni d'une carte SIM (de l'anglais « *Subscriber Identity Module* »). Il s'agit d'une puce contenant un microcontrôleur et de la mémoire. Cette carte SIM est associée à un abonnement téléphonique (de type transmission de données) qui doit être réglé par le commerçant. Outre le fait que ce type d'abonnement est relativement onéreux, la mise en oeuvre des fonctionnalités de communication est attribuée au terminal de paiement. Ainsi, en plus des fonctions de paiement, le terminal doit gérer des fonctions de communication, qui ne sont pas naturellement les fonctions que l'on attend d'un terminal de paiement.

Pour pallier le problème de coût de l'abonnement associé à la communication GPRS notamment, de nouveaux types de terminaux de paiement communiquent par l'intermédiaire d'un réseau de type « WiFi » (de l'anglais « *Wireless Fidelity* ») par exemple. Le commerçant n'est alors plus obligé de souscrire un abonnement particulier. Le terminal de paiement peut se connecter au réseau WiFi du commerçant et accéder, comme dans une connexion filaire, aux serveurs bancaires. Cependant, l'usage du terminal de paiement est alors limité à la zone de couverture du réseau WiFi, ce qui ne convient pas à une utilisation nomade (par exemple un médecin en visite chez ses patients).

Ainsi, il existe un besoin pour proposer un terminal de paiement qui puisse être utilisé par les commerçants nomades, donc en utilisant un réseau de communication sans fil de type GPRS/UMTS, tout en minimisant les coûts de mise en oeuvre d'un tel terminal de paiement Dans ce contexte il est fait référence aux documents d'art antérieur EP 1 732 291 A1, US 6598845 B1, US 2001/037249 A1 et US 7 003 316 B1.

### 3. Exposé de l'invention

L'invention ne présente pas ces inconvénients de l'art antérieur. L'invention se rapporte plus particulièrement à un terminal de paiement qui se présente sous la forme d'un dispositif de paiement qui est physiquement appairé à un terminal de communication. Plus particulièrement, le terminal de communication auquel le dispositif de paiement est appairé est un téléphone mobile ou un téléphone intelligent (« smartphone » en anglais), c'est-à-dire un téléphone mobile disposant aussi de fonctions d'un assistant numérique personnel (PDA). Ainsi, l'invention permet de pallier les inconvénients de l'art antérieur et notamment permet de ne pas avoir recours à une ligne téléphonique dédiée pour réaliser une connexion au réseau de communication et aux serveurs tels que des serveurs d'autorisation ou des serveurs bancaires.

Par ailleurs, du fait de l'appairage du dispositif de paiement avec le terminal de communication, il convient de sécuriser cet appairage afin d'éviter que le terminal de communication se sépare inopinément du dispositif de paiement (par exemple si le terminal de paiement tombe au sol) et provoque un dysfonctionnement du terminal de paiement.

Dans un mode de réalisation particulier de l'invention, il est proposé une interface modulaire d'appairage d'un dispositif de paiement avec un terminal de communication pour former un terminal de paiement. Cette interface modulaire comprend :
- un support formant étui, adapté pour être monté solidaire d'une face d'appairage du dispositif de paiement et définissant un logement pour le terminal de communication ; et
- un couvercle, adapté pour, dans une position fermée, fermer le logement et maintenir le terminal de communication s'il a préalablement été inséré dans le logement, et pour, dans une position ouverte, permettre d'insérer dans ou d'extraire du logement le terminal de communication,
Le couvercle et le support comprennent des moyens d'articulation adaptés pour:
- mouvement de translation du couvercle par rapport au support, de la position fermée à une position intermédiaire, et inversement ; dans la position intermédiaire le couvercle ne maintenant pas le terminal de communication, s'il a préalablement été inséré dans le logement, mais l'empêchant de sortir entièrement du logement; et
- un mouvement de rotation du couvercle par rapport au support, de la position intermédiaire à la position ouverte, et inversement.

Le principe général de l'invention consiste donc à sécuriser l'appairage du dispositif de paiement avec le terminal de communication grâce à un mécanisme de maintien comprenant un support (formant étui) sur lequel est articulé un couvercle selon une cinématique particulière, qui ne peut pas se produire accidentellement (par exemple si le terminal de paiement tombe par terre ou subit un choc). En effet, cette cinématique est basée sur une succession de deux mouvements du couvercle par rapport au support, à savoir :
- pour l'extraction du terminal de communication, un mouvement de translation (passage de la position fermée à la position intermédiaire) suivi d'un mouvement de rotation (passage de la position intermédiaire à la position ouverte) ; et
- pour l'insertion du terminal de communication, un mouvement de rotation (passage de la position ouverte à la position intermédiaire) suivi d'un mouvement de translation (passage de la position intermédiaire à la position fermée). Selon un aspect particulier de l'invention, les moyens d'articulation comprennent :
- deux fentes formées chacune dans un bras du support, chaque fente comprenant une partie rectiligne et se terminant par une partie circulaire ; et
- deux ergots s'étendant chacun à partir d'un bras du couvercle, chaque ergot possédant une forme circulaire avec deux méplats,
Chacun des ergots est adapté pour coopérer avec une des fentes par coulissement dans la partie rectiligne de ladite fente, pendant le mouvement de translation, et par rotation à l'intérieur de la partie circulaire de ladite fente, pendant le mouvement de rotation.

La partie circulaire des fentes permet de réaliser le mouvement de rotation (par coopération avec la partie circulaire des ergots) sans risque de cassures des moyens d'articulation.

Selon une caractéristique particulière, l'interface modulaire comprend deux éléments élastiques comprenant chacun une première extrémité fixée à un bras du couvercle, et une deuxième extrémité libre formant crochet et coopérant avec un élément de blocage et une cavité formées dans le support ou ladite face d'appairage du dispositif de paiement, ladite deuxième extrémité étant adaptée pour glisser sur l'élément de blocage pour venir se loger dans la cavité lorsque le couvercle passe de la position intermédiaire à la position fermée.

Ainsi, en fin de mouvement de translation pour arriver à la position fermée, l'utilisateur dispose d'un retour d'information (ressenti d'un point dur lors du passage de l'élément de blocage), lui indiquant que le couvercle est bien fermé.

Dans un autre mode de réalisation de l'invention, il est proposé un terminal de paiement comprenant un dispositif de paiement et une interface modulaire telle que précitée, adaptée pour appairer le dispositif de paiement avec un terminal de communication.

### 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- les figures 1A à 1D illustrent un exemple de terminal de paiement selon une première configuration comprenant un dispositif de paiement, un terminal de communication et une interface modulaire (comprenant un support formant étui) ;
- la figure 2 présente une vue éclatée du dispositif de paiement et de l'interface modulaire apparaissant sur la figure 1C ;
- les figures 3 et 4 illustrent un mode de réalisation particulier d'un support formant étui compris dans l'interface modulaire apparaissant sur la figure 2 ;
- les figures 5 et 6 illustrent un mode de réalisation particulier d'un couvercle du support formant étui compris dans l'interface modulaire apparaissant sur la figure 2;
- les figures 7 à 9 illustrent la cinématique d'articulation du couvercle, illustré sur les figures 5 et 6, avec le support formant étui, illustré sur les figures 3 et 4, pour l'extraction du terminal de communication ;
- la figure 10 illustre une carte de connexion comprise dans l'interface modulaire apparaissant sur la figure 2 ;
- les figures 11 et 12 illustrent l'assemblage de la carte de connexion illustrée sur la figure 10, avec le support formant étui et le dispositif de paiement ;
- les figures 13 et 14 illustrent un exemple de terminal de paiement selon une deuxième configuration comprenant un dispositif de paiement et une interface modulaire (comprenant un support formant capot).

### 5. Description d'un mode de réalisation de l'invention

Le principe général de l'invention repose sur l'appairage physique d'un dispositif de paiement à un terminal de communication, tel qu'un « smartphone », pour former un terminal de paiement selon une première configuration.

Ainsi, l'invention permet de pallier les inconvénients de l'art antérieur et notamment permet de ne pas avoir recours à une ligne téléphonique dédiée pour réaliser une connexion au réseau de communication et aux serveurs tels que des serveurs d'autorisation ou des serveurs bancaires.

Plus particulièrement, dans une première configuration, le dispositif de paiement est physiquement appairé avec le terminal de communication par l'intermédiaire d'une structure d'appairage particulière, appelée interface modulaire. Lorsqu'elle est utilisée, cette interface modulaire est fixée sur une face arrière du dispositif de paiement (aussi appelée face d'appairage). Cette structure est démontable, selon un mode de réalisation particulier de l'invention, en mettant en oeuvre une cinématique particulière.

Cette interface modulaire, selon l'invention, permet d'insérer et de retenir le terminal de communication dans un logement prévu à cet effet. Parmi les éléments de cette interface modulaire, selon l'invention, on distingue notamment une carte électronique de connexion, permettant de réaliser une connexion physique entre le dispositif de paiement et le terminal de communication.

Cette interface modulaire comprend d'autres éléments qui, selon l'invention, permettent d'assurer une sécurité d'usage du terminal de paiement formé du dispositif de paiement et du terminal de communication.

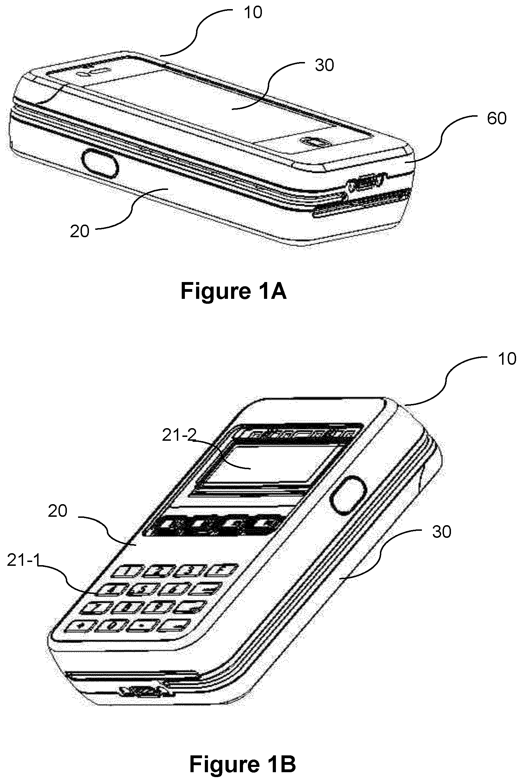

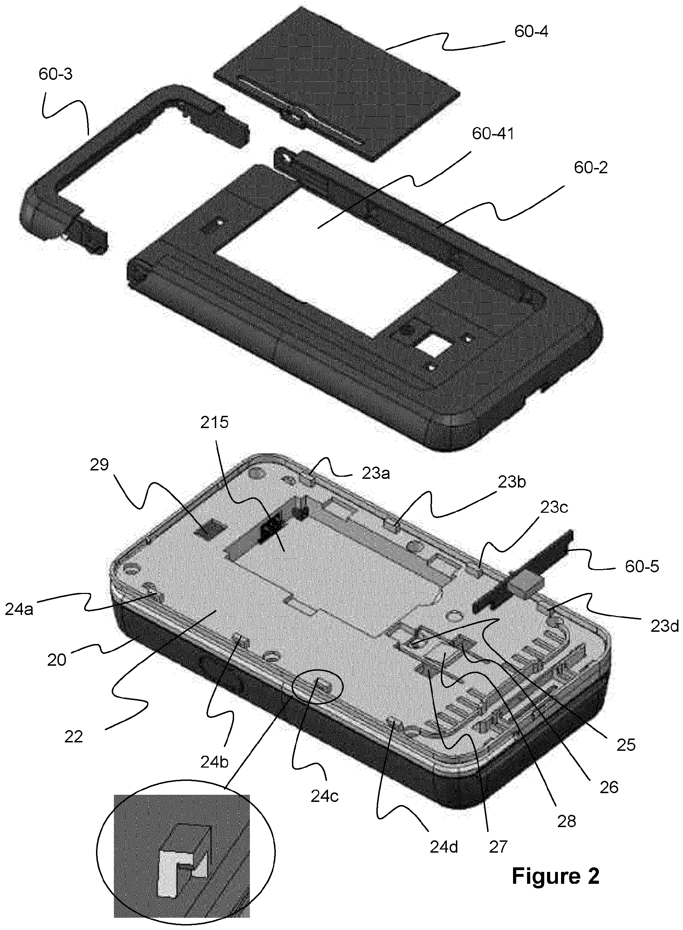

Plus particulièrement, un exemple de terminal de paiement selon une première configuration est décrit en relation avec les figures 1A à 1D et 2.

Le terminal de paiement (10) comprend deux composants généraux que sont le dispositif de paiement (20) et le terminal de communication (30), et qui sont appairés grâce à une interface modulaire (60).

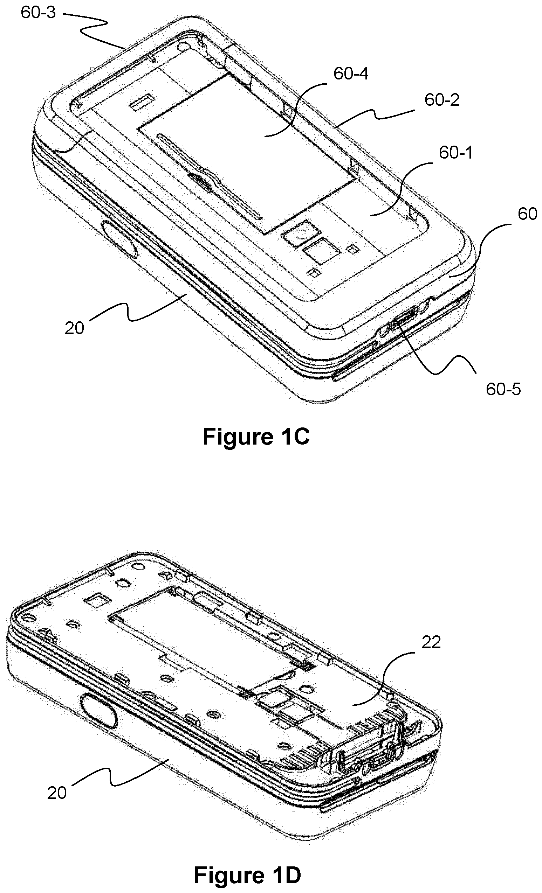

La figure 1A présente une vue en perspective du terminal de paiement (10), avec le terminal de communication (30), dont la face avant est visible, sur le dessus. La figure 1B présente une vue en perspective du terminal de paiement (10), avec le dispositif de paiement (20), dont la face avant est visible, sur le dessus. La figure 1C présente une vue en perspective du dispositif de paiement (20) et de l'interface modulaire (60), sans le terminal de communication (30). La figure 2 présente une vue éclatée du dispositif de paiement et de l'interface modulaire apparaissant sur la figure 1C. La figure 1D présente une vue en perspective du dispositif de paiement (20), avec la face arrière (face d'appairage) (22) sur le dessus.

Comme illustré dans un mode de réalisation illustratif et non limitatif de l'invention, le dispositif de paiement (20) comprend une face avant, visible sur la figure 1B, présentant un clavier pour la saisie d'information (21-1) et un écran de visualisation (21-2) des informations saisies. Le dispositif de paiement comprend, en face arrière, visible sur la figure 1D, une surface (22) (aussi appelée face d'appairage) permettant la fixation de l'interface modulaire (60) pour l'appairage du terminal de communication (30).

Plus particulièrement, dans cette première configuration, l'interface modulaire définit un logement (60-1) d'insertion et d'appairage du terminal de communication (30). Ce logement (60-1) est ouvert pour permettre l'accès direct à la face avant du terminal de communication (30) (et donc notamment à l'écran et au bouton de navigation présents sur cette face avant).

Plus précisément, l'interface modulaire (60) comprend :
- un support formant étui (60-2), destiné à être monté solidaire de la face d'appairage (22) du dispositif de paiement ((20) et définissant le logement précité (60-1) pour le terminal de communication (30) ;
- un couvercle (60-3) coopérant par articulation avec le support (60-2), et pouvant prendre une position fermée, dans laquelle il ferme le logement précité (60-1) et maintient le terminal de communication (30) s'il a préalablement été inséré dans le logement, et une position ouverte, dans laquelle il permet d'insérer dans ou d'extraire du logement le terminal de communication ;
- une trappe de batterie (60-4), permettant de fermer un logement de batterie principale (215) formé dans la face d'appairage (22) du dispositif de paiement (20), via une ouverture (60-41) formée dans le support formant étui (60-2) ; et
- une carte électronique de connexion (60-5) (voir ci-après la discussion des figures 10 à 12).

Si on veut utiliser le dispositif de paiement (20) avec différents types de terminaux de communication, il suffit de disposer de plusieurs interfaces modulaires adaptées chacune à l'un de ces différents types de terminaux de communication.

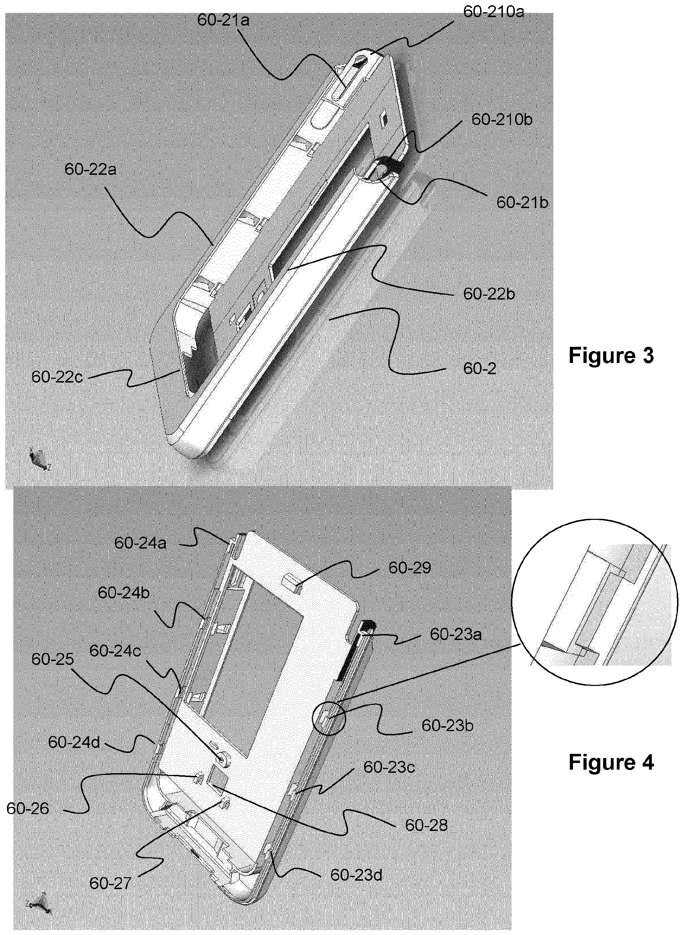

On présente maintenant, en relation avec les **figures 2** **et** **4**, une pluralité de moyens de fixation amovible de l'interface modulaire (60) (et plus précisément du support (60-2)) sur la face d'appairage (22) du dispositif de paiement (20), dans un mode de réalisation particulier.

Parmi ces moyens de fixation, on distingue deux ensembles d'éléments de fixation.

Un premier ensemble d'éléments de fixation comprend au moins un couple de premiers éléments de fixation, dont la solidarisation de l'un, compris dans le support, avec l'autre, compris dans le dispositif de paiement, est réalisée par un mouvement de translation du support par rapport au dispositif de paiement. Ce premier ensemble d'éléments de fixation permet un verrouillage du support par rapport au dispositif de paiement dans cinq des six degrés de liberté possibles (le sixième degré de liberté, non verrouillé, étant celui selon l'axe de la translation précitée).

Un deuxième ensemble d'éléments de fixation comprend au moins un couple de deuxièmes éléments de fixation, dont la solidarisation de l'un, compris dans l'interface modulaire, avec l'autre, compris dans le dispositif de paiement, empêche un mouvement de translation inverse (par rapport à celui précité) du support par rapport au dispositif de paiement. Ce deuxième ensemble d'éléments de fixation permet un verrouillage du support par rapport au dispositif de paiement dans le sixième degré de liberté non verrouillé par le premier ensemble d'éléments de fixation.

On présente maintenant en détail les éléments de fixation compris dans chacun de ces premier et deuxième ensembles, dans un exemple de réalisation.

Le premier ensemble comprend huit couples « butée / téton » (ce nombre de couple n'est pas limitatif), répartis sur les deux longueurs de la face d'appairage du dispositif de paiement. Chaque butée (23a à 23d, 24a à 24d) possède un épaulement et s'étend à partir de la face d'appairage du dispositif de paiement. Chaque téton (60-23a à 60-23d, 60-24a à 60-24d) est situé sur la face de fixation du support et est destiné à venir s'emboîter dans l'épaulement de la butée associée, à l'issue du mouvement de translation du support par rapport au dispositif de paiement.

Le premier ensemble comprend également trois couples « ouverture / patte en forme de L » (ce nombre de couple n'est pas limitatif). Chaque ouverture (26, 27, 29) est formée dans la face d'appairage du dispositif de paiement. Chaque patte en forme de L (60-26, 60-27, 60-29) s'étend à partir de la face de fixation du support et est destinée à venir s'emboîter dans l'ouverture associée à l'issue du mouvement de translation du support par rapport au dispositif de paiement.

Le deuxième ensemble comprend un couple « clip / ouverture » (ce nombre de couple n'est pas limitatif). Le clip (28) s'étend à partir de la face d'appairage du dispositif de paiement, et comprend une lame présentant une tolérance à la déformation. L'ouverture (60-28) est formée sur la face de fixation du support et est destinée à recevoir le clip à l'issue du mouvement de translation du support par rapport au dispositif de paiement.

Le deuxième ensemble comprend également un couple « taraudage / trou » coopérant avec une vis. Le taraudage (25) est formé dans la face d'appairage du dispositif de paiement. Le trou (60-25) est formé dans le support. Le trou vient en regard du taraudage à l'issue du mouvement de translation du support par rapport au dispositif de paiement. La vis (non illustrée) traverse le trou et est vissée dans le taraudage. Ceci permet d'empêcher le mouvement de translation inverse du support par rapport au dispositif de paiement.

Optionnellement, le terminal de paiement (10) comprend des moyens (non illustrés) de déclenchement d'une alarme sur détection d'un dévissage de la vis. Ces moyens comprennent par exemple une lame métallique venant en contact électrique avec une borne à une tension prédéterminée, sous la pression de l'extrémité de la vis quand celle-ci est vissée dans le taraudage. Cette lame, qui forme un capteur, est par exemple reliée à un processeur compris sur une carte mère du dispositif de paiement. En fonction de la valeur de la tension à laquelle se trouve la lame, le processeur en déduit si la vis est vissée ou dévissée et peut prendre une décision de déclenchement d'une alarme.

Dans une variante (non illustrée), le support comprend un logement de batterie pouvant loger une batterie principale du dispositif de paiement, et le trou formé dans le support est formé dans une face interne de ce logement de batterie. Ainsi, un attaquant est forcé de déconnecter la batterie principale du dispositif de paiement pour pouvoir désolidariser le support formant étui (60-2) d'avec le dispositif de paiement (20). Optionnellement, dans cette variante, le terminal de paiement (10) comprend des moyens (non illustrés) de déclenchement d'une alarme sur détection d'une déconnexion de la batterie principale. Ces moyens comprennent par exemple un processeur compris sur une carte mère du dispositif de paiement. Ce processeur est capable de détecter une absence d'alimentation provenant de la batterie principale et peut prendre une décision de déclenchement d'une alarme.

Dans l'exemple illustré sur les figures, le deuxième ensemble comprend également un couple « logement de batterie principale / ouverture » coopérant avec une trappe de batterie. Le logement de batterie principale (215) est formé dans la face d'appairage du dispositif de paiement. L'ouverture (60-41) est formée dans le support. La trappe de batterie (60-4) est placée pour fermer, après le mouvement de translation du support par rapport au dispositif de paiement, le logement de batterie principale via l'ouverture (60-41). La trappe de batterie forme alors une butée pour le bord du support entourant l'ouverture (60-41), empêchant ainsi le mouvement de translation inverse du support par rapport au dispositif de paiement.

Optionnellement, le terminal de paiement (10) comprend des moyens (non illustrés) de déclenchement d'une alarme sur détection d'une ouverture de la trappe de batterie. Ces moyens comprennent par exemple une lame métallique venant en contact électrique avec une borne à une tension prédéterminée, quand la batterie principale est insérée dans son logement. Cette lame, qui forme un capteur, est par exemple reliée à un processeur compris sur une carte mère du dispositif de paiement. En fonction de la valeur de la tension à laquelle se trouve la lame, le processeur en déduit si la trappe de batterie est ouverte ou fermée et peut prendre une décision de déclenchement d'une alarme.

Dans une variante (non illustrée), le deuxième ensemble comprend un couple « batterie principale / ouverture ». La batterie principale amovible peut loger dans un logement de batterie principale du dispositif de paiement. L'ouverture (60-41) est formée dans le support. La batterie principale est placée dans le logement de batterie principale, après le mouvement de translation du support par rapport au dispositif de paiement. La batterie forme alors une butée, empêchant ainsi le mouvement de translation inverse du support par rapport au dispositif de paiement. Optionnellement, dans cette variante, le terminal de paiement (10) comprend des moyens (non illustrés) de déclenchement d'une alarme sur détection d'une déconnexion de la batterie principale. Un exemple de réalisation de tels moyens a déjà été donné ci-dessus (processeur capable de détecter une absence d'alimentation provenant de la batterie principale et pouvant prendre une décision de déclenchement d'une alarme).

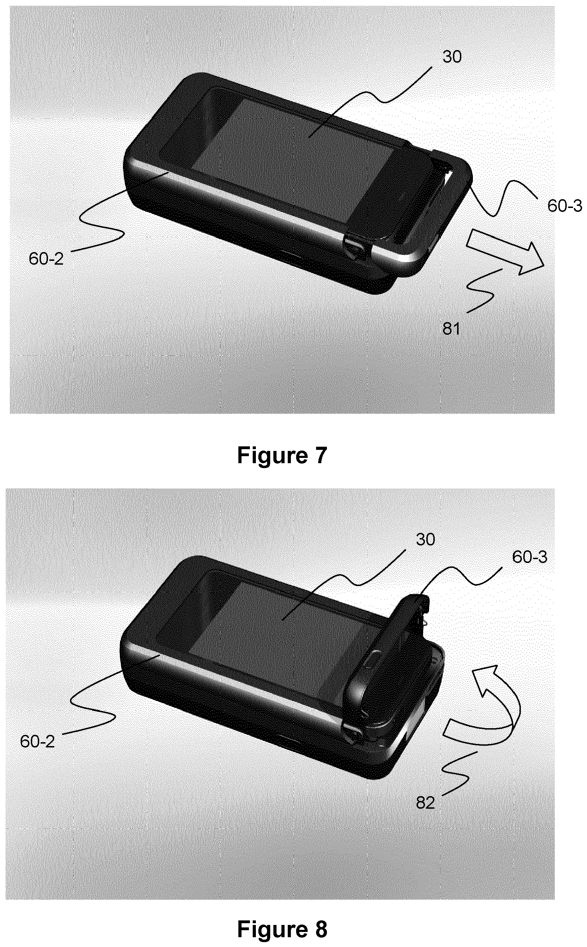

On présente maintenant, en relation avec les **figures 7 à 9**, la cinématique d'articulation du couvercle (60-3) avec le support formant étui (60-2), pour l'extraction du terminal de communication (30).

On suppose donc que le terminal de communication (30) est inséré dans le logement (60-1, figure 1C) défini par le support formant étui (60-2), et que le couvercle (60-3) est en position fermée, comme illustré sur la figure 1A. Dans cette position fermée, le couvercle (60-3) ferme le logement et y maintient le terminal de communication.

Dans une première étape, le couvercle (60-3) passe de la position fermée à une position intermédiaire (illustrée sur la figure 7), par un mouvement de translation par rapport au support formant étui (60-2). Sur la figure 7, ce mouvement de translation est symbolisé par la flèche référencée 81. Dans la position intermédiaire, le couvercle ne maintient pas le terminal de communication (ce dernier peut se déplacer en translation dans le logement), mais l'empêche de sortir entièrement du logement.

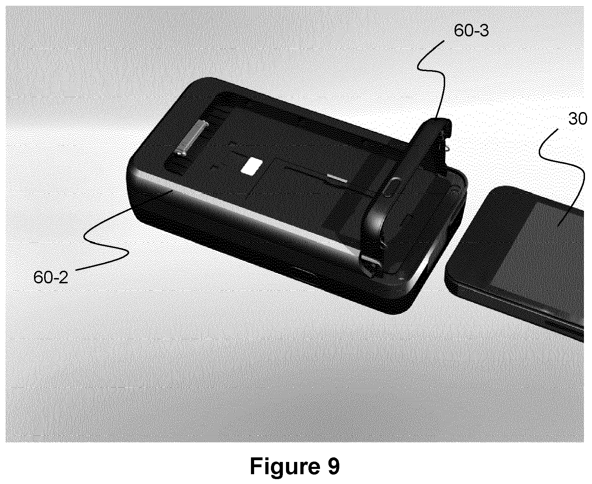

Dans une deuxième étape, le couvercle (60-3) passe de la position intermédiaire à une position ouverte (illustrée sur la figure 8), par un mouvement de rotation par rapport au support formant étui (60-2). Sur la figure 8, ce mouvement de rotation est symbolisé par la flèche référencée 82. Le couvercle étant dans la position ouverte, le terminal de communication (30) peut être extrait de son logement, comme illustré sur la figure 9.

Pour l'insertion du terminal de communication (30) dans le logement du support formant étui (60-2), la cinématique d'articulation du couvercle (60-3) est obtenue en inversant l'ordre des étapes précitées : le couvercle étant dans la position ouverte, le terminal de communication (30) peut être inséré dans son logement, puis le couvercle (60-3) passe de la position ouverte à la position intermédiaire, et enfin le couvercle (60-3) passe de la position intermédiaire à la position fermée.

On présente maintenant, en relation avec les **figures 3****,** **5 et 6**, un exemple de réalisation des moyens d'articulation permettant de mettre en oeuvre les cinématiques d'extraction et insertion décrites ci-dessus.

Comme illustré sur la figure 3, le support formant étui (60-2) définit trois (60-22a, 60-22b et 60-22c) des quatre côtés du logement (60-1) pour le terminal de communication (le quatrième côté du logement étant défini par le couvercle (60-3)). A l'extrémité de chacun des deux côtés (60-22a, 60-22b) du support formant étui (60-2) qui coopèrent avec le couvercle (60-3), le support formant étui (60-2) comprend un bras (60-210a, 60-210b) possédant une fente (60-21a, 60-21b). Chaque fente comprend une partie rectiligne et se termine par une partie circulaire.

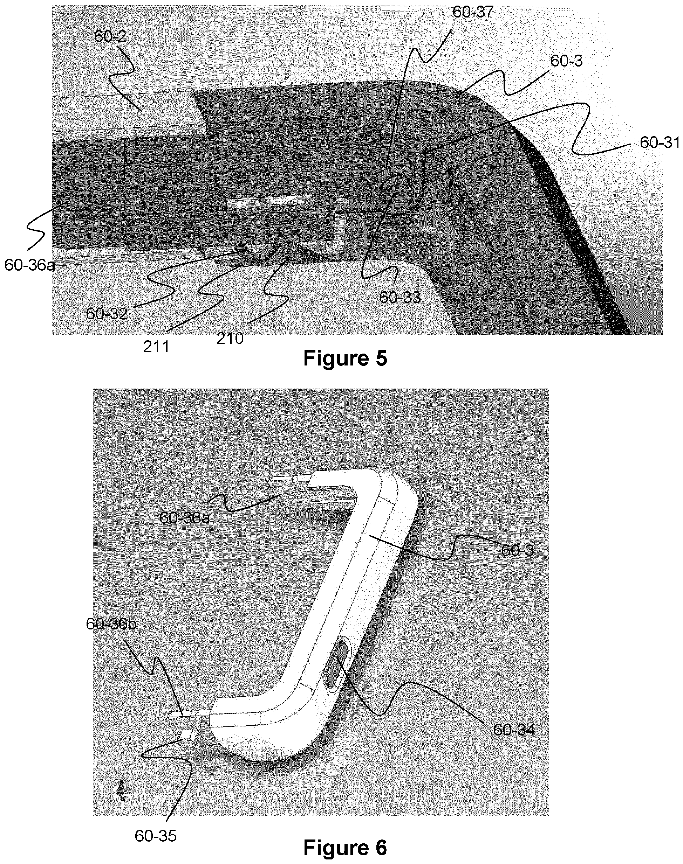

Comme illustré sur la figure 6, le couvercle (60-3) comprend deux bras (60-36a, 60-36b), à partir de chacun desquels s'étend un ergot (60-35) possédant une forme circulaire avec deux méplats. Le couvercle comprend également un bouton (60-34) permettant d'appuyer sur le bouton marche/arrêt du terminal de communication quand celui-ci est inséré dans le logement de l'interface modulaire.

Chacun des ergots (60-35) coopère avec une des fentes (60-21a, 60-21b) en coulissant dans la partie rectiligne de la fente, pendant le mouvement de translation, et en tournant à l'intérieur de la partie circulaire de la fente, pendant le mouvement de rotation.

On présente maintenant, en relation avec la figure 5, un exemple de réalisation de moyens permettant de maintenir le couvercle (60-3) dans la position fermée. L'interface modulaire comprend deux éléments élastiques (60-37), par exemple deux ressorts à une spire enroulée autour d'un plot (60-33) du couvercle. Chaque élément élastique comprend une première extrémité (60-31), fixée à un bras (60-36a) du couvercle, et une deuxième extrémité libre (60-32), formant crochet et coopérant avec un élément de blocage (protubérance à double pente) (210) et une cavité (211) formées dans la face d'appairage du dispositif de paiement (ou dans le support, dans une variante de réalisation). Quand le couvercle passe de la position intermédiaire à la position fermée, la deuxième extrémité (60-32) du ressort (60-37) glisse sur l'élément de blocage (210) pour venir se loger dans la cavité (211).

## Revendications

1. Interface modulaire (60) d'appairage d'un dispositif de paiement (20) avec un terminal de communication (30), ladite interface modulaire comprenant :
- un support formant étui (60-2), adapté pour être monté solidaire d'une face d'appairage du dispositif de paiement et définissant un logement (60-1) pour le terminal de communication ; et
- un couvercle (60-3), adapté pour, dans une position fermée, fermer le logement et maintenir le terminal de communication s'il a préalablement été inséré dans le logement, et pour, dans une position ouverte, permettre d'insérer dans ou d'extraire du logement le terminal de communication, le couvercle et le support comprenant des moyens d'articulation (60-21a, 60-21b, 60-37, 60-35) adaptés pour :
- un mouvement de translation du couvercle par rapport au support, de la position fermée à une position intermédiaire, et inversement ; dans la position intermédiaire le couvercle ne maintenant pas le terminal de communication, s'il a préalablement été inséré dans le logement, mais l'empêchant de sortir entièrement du logement; et
- un mouvement de rotation du couvercle par rapport au support, de la position intermédiaire à la position ouverte, et inversement.

2. Interface modulaire selon la revendication 1, les moyens d'articulation comprenant :
- deux fentes (60-21a, 60-21b) formées chacune dans un bras du support, chaque fente comprenant une partie rectiligne et se terminant par une partie circulaire ; et
- deux ergots (60-35) s'étendant chacun à partir d'un bras du couvercle, chaque ergot possédant une forme circulaire avec deux méplats, chacun des ergots étant adapté pour coopérer avec une des fentes par coulissement dans la partie rectiligne de ladite fente, pendant le mouvement de translation, et par rotation à l'intérieur de la partie circulaire de ladite fente, pendant le mouvement de rotation.

3. Interface modulaire selon l'une quelconque des revendications 1 et 2, ladite interface modulaire comprenant deux éléments élastiques (60-37) comprenant chacun une première extrémité fixée à un bras du couvercle, et une deuxième extrémité libre formant crochet et coopérant avec un élément de blocage (210) et une cavité (211) formées dans le support ou ladite face d'appairage du dispositif de paiement, ladite deuxième extrémité étant adaptée pour glisser sur l'élément de blocage pour venir se loger dans la cavité lorsque le couvercle passe de la position intermédiaire à la position fermée.

4. Terminal de paiement (10) comprenant un dispositif de paiement (20) et une interface modulaire (60) selon l'une quelconque des revendications 1 à 3, adaptée pour appairer le dispositif de paiement avec un terminal de communication.

## Patentansprüche

1. Modulare Schnittstelle (60) zum Paaren einer Zahlungsvorrichtung (20) mit einem Kommunikationsterminal (30), wobei die modulare Schnittstelle folgendes aufweist:
- eine Halterung, die ein Gehäuse (60-2) bildet, das angepasst ist, um fest verbunden mit einer Paarungsseite der Bezahlvorrichtung montiert zu werden und ein Gehäuse (60-1) für das Kommunikationsterminal zu bestimmen; und
- eine Abdeckung (60-3), die angepasst ist, um in einer geschlossenen Position den Sitz zu schließen und das Kommunikationsterminal zu halten, wenn es zuvor in den Sitz eingeführt wurde, und in einer offenen Position ein Einführen ermöglichen oder aus dem Gehäuse das Kommunikationsterminal zu entnehmen, wobei die Abdeckung und die Halterung Gelenkmittel (60-21a, 60-21b, 60-37, 60-35) umfassen, die für folgendes angepasst wurden:
- eine Translationsbewegung der Abdeckung gegenüber der Halterung von der geschlossenen Position zu einer Zwischenposition und umgekehrt; in der Zwischenposition hält der Deckel das Kommunikationsterminal nicht, wenn es zuvor in den Sitz eingeführt wurde, aber verhindert, dass es den Sitz vollständig verlässt; und
- eine Drehbewegung des Deckels gegenüber der Halterung, der Zwischenposition in die Offenstellung und umgekehrt.

2. Modulare Schnittstelle nach Anspruch 1, wobei das Gelenkmittel folgendes aufweist:
- zwei Schlitze (60-21a, 60-21b), die jeweils in einem Arm der Halterung ausgebildet sind, wobei jeder Schlitz einen geradlinigen Abschnitt umfasst und in einem kreisförmigen Abschnitt endet; und
- zwei Zapfen (60-35), die sich jeweils von einem Arm des Deckels erstrecken, wobei jeder Zapfen eine Kreisform mit zwei Abflachungen aufweist und jeder der Zapfen dazu ausgelegt ist, mit einem der Schlitze durch Gleiten in dem geradlinigen Teil davon zusammenzuwirken, während der Translationsbewegung und durch Drehung innerhalb des kreisförmigen Abschnitts des genannten Schlitzes, während der Drehbewegung.

3. Modulare Schnittstelle nach einem der Ansprüche 1 und 2, wobei die genannte modulare Schnittstelle zwei elastische Elemente (60-37) umfasst, die jeweils ein an einem Arm der Abdeckung angebrachtes erstes Ende und ein zweites freies Ende umfassen, das einen Haken bildet und mit einem Blockierelement (210) und einem Hohlraum (211) zusammenwirkt, die in der Halterung oder der Paarungsseite der Bezahlvorrichtung ausgebildet ist, wobei das zweite Ende so angepasst wurde, dass es auf dem Verriegelungselement gleitet, um in dem Hohlraum aufgenommen zu werden, wenn die Abdeckung sich von der Zwischenposition in die geschlossene Position bewegt.

4. Zahlungsterminal (10) mit einer Zahlungsvorrichtung (20) und einer modularen Schnittstelle (60) nach einem der Ansprüche 1 bis 3, die dafür ausgelegt ist, die Zahlungsvorrichtung mit einem Kommunikationsterminal zu koppeln.

## Claims

1. Modular interface (60) for pairing a payment device (20) with a communications terminal (30), said modular interface comprising:
- a case-forming support (60-2), intended to be mounted so as to be fixedly attached to a pairing face of the payment device and defining a housing (60-1) for the communications terminal; and
- a lid (60-3) capable of taking a closed position in which it closes the housing and holds the communications terminal if it has been preliminarily inserted into the housing, and an open position in which it enables the communications terminal to be inserted into or removed from the housing,
the lid and the support comprising hinging means 60-21a, 60-21b, 60-37, 60-35) configured for:
- a motion of translation of the lid relative to the support, from the closed position to an intermediate position, and vice versa; the lid not holding the communications terminal in the intermediate position if it has been preliminarily inserted into the housing but preventing it from coming entirely out of the housing; and
- a motion of rotation of the lid relative to the support, from the intermediate position to the open position, and vice versa.

2. Modular interface according to claim 1, the hinging means comprising:
- two slots (60-21a, 60-21b), each formed in an arm of the support, each slot comprising a rectilinear part and ending with a circular part; and
- two pins (60-35) each extending from an arm of the lid, each pin having a circular shape with two flat sides, each of the pins being configured for cooperating with one of the slots in sliding in the rectilinear part of said slot, during the motion of translation, and in rotating inside the circular part of said slot, during the motion of rotation.

3. Modular interface according to any one of the claims 1 and 2, said modular interface comprising two elastic elements (60-37) each comprising a first end fixed to an arm of the lid and a second free hook-forming end cooperating with a blocking element (210) and a cavity (211) formed in the support of said pairing face of the payment device, said second end sliding on the blocking element to get housed in the cavity when the lid passes from the intermediate position to the closed position.

4. Payment terminal (10) comprising a payment device (20) and a modular interface (60) according to any one of the claims 1 to 3, enabling the payment device to be paired with a communications terminal.
